# EUROPEAN PATENT APPLICATION

(11) **EP 3 531 758 A1**
(43) Date of publication of application: **28.08.2019**
(21) Application number: 17889207.1
(22) Date of filing: 16.02.2017
(51) Int. Cl.: H04W 60/00, H04W 36/04, H04W 16/32, H04W 36/14, H04W 68/12, H04W 76/27

(54) **METHOD AND DEVICE FOR PAGING USER EQUIPMENT**

(30) Priority: 30.12.2016 WO PCT/CN2016/113855
(71) Applicant: Huawei Technologies Co., Ltd., Longgang District Shenzhen, Guangdong 518129 (CN)
(72) Inventor: YIN, Yu, Shenzhen Guangdong 518129 (CN); QI, Caixia, Shenzhen Guangdong 518129 (CN)
(74) Representative: Körber, Martin Hans
(86) International application number: PCT/CN2017/073801
(87) International publication number: WO 2018/120379

(57) **Abstract**

The present invention provides a method for paging user equipment and an apparatus. The method includes: receiving, by user equipment, an area identifier and a corresponding layering type, where the layering type is a capacity-oriented type or a coverage-oriented type; if an area currently accessed by the user equipment is a capacity-oriented area, switching, by the user equipment, to a coverage-oriented area based on the layering type when changing to an idle state; and receiving a paging message for the coverage-oriented area. Alternatively, the method includes: determining, by a network device, a coverage-oriented area in a registration area of user equipment based on an area identifier and a corresponding layering type, and paging the user equipment in the coverage-oriented area. According to the present invention, based on the layering type, switching to a coverage-oriented area is implemented on a user equipment side, and paging in the coverage-oriented area is implemented on a network side, so that paging overheads of a base station and a network device are reduced, and radio resources are saved.

## Description

### TECHNICAL FIELD

The present invention relates to the communications field, and in particular, to an apparatus and a method for selecting, by user equipment in an idle state, a wireless coverage area to be camped on and paging the user equipment by a network.

### BACKGROUND

In a mobile communications network, when there is no data transmission between user equipment and the network within a period of time, the network changes the user equipment from a connected state to an idle state, to reduce a user equipment number segment and save wireless network resources. When the user equipment is in the idle state, the network releases a radio resource allocated to the user equipment for user data transmission, and the user equipment operates in a power-saving mode. When the user equipment needs to send or receive user data, the user equipment in the idle state needs to first change to the connected state.

When the user equipment is in the idle state, if the network needs to send signaling or user data to the user equipment, a network device instructs, through a paging procedure, the user equipment to change to the connected state. When the network device needs to page the user equipment, the network device sends a paging message to each base station in a recorded wireless coverage area of the user equipment in the idle state, and each base station pages the user equipment within coverage of the base station. After receiving the paging message for the user equipment, the user equipment initiates a service request procedure, and then changes to the connected state. In different mobile communications networks, technical terms of a wireless coverage area, namely, a paging area, of the user equipment in the idle state are different, but basic principles are the same. For example, in a 2G/3G GPRS or UMTS network, the paging area is a routing area (Routing Area, RA); in a 4G EPS network, the paging area is a tracking area list (Tracking Area List, TA List); and in a 5G network, the paging area may be a tracking area list or a new technical term. According to current wireless network planning, one radio paging area (for example, one TA List) includes 100 to hundreds of base stations. From a perspective of a current traffic model in the network, the user equipment is paged for more than ten times per hour on average, and frequently changes between the connected state and the idle state. As a user equipment density and a base station density increase, a quantity of paging times in a same paging area becomes larger.

A quantity of user equipments in the network keeps increasing with development of mobile communications technologies. New applications of the user equipment, such as a 4K high-definition video and virtual reality, require an increasingly higher network rate. Compared with the 4G network, the 5G network aims to serve more users, support more device connections, and provide a higher rate and richer user experience. All these mean that the network needs more spectrum resources and denser cell coverage. Because a low frequency part of wireless frequencies is already quite crowded and there are still many unallocated spectrums in a high frequency part of the wireless frequencies, 5G can provide larger bandwidth by fully using a high-frequency spectrum resource, to support more user equipments. However, a higher wireless spectrum indicates faster signal attenuation and smaller base station coverage. Therefore, a relatively proper deployment manner is to use low frequencies for wide coverage to provide a user with a seamless wireless access service, and use high frequencies for hotspot coverage to provide high-capacity and high-bandwidth service experience, such as a high-definition video.

A problem of insufficient network capacities is particularly obvious in some hotspot areas, such as a shopping mall and a stadium, and service traffic in such an area is several times an average value of service traffic in the network. Therefore, a high-frequency cell needs to be deployed in a hotspot area, to increase a network capacity and perform traffic distribution of services. Generally, two types of base stations may be deployed in these areas. One type of base station, referred to as a coverage-oriented base station, usually uses low frequencies for wide coverage. The other type of base station, referred to as a capacity-oriented base station, usually uses high frequencies to increase a network capacity, and base stations of this type need to be deployed in an overlay (Overlay) manner in a hotspot area, to effectively increase a network capacity of the hotspot area.

In the paging procedure, the network device needs to page the user equipment by paging all base stations in a paging area. As more high frequencies are overlaid in capacity-oriented coverage, a density of base stations in a unit area becomes higher. On one hand, for one time of paging for one user equipment, a quantity of base stations and a quantity of paging messages in a paging area synchronously increase, and a larger quantity of resources of the base stations and radio channels are occupied for processing the paging messages. On the other hand, in a paging area, for example, in a TA list, paging requests received by all base stations from the network are the same. This means that both a macro base station for wide coverage and a capacity-oriented small cell for hotspot coverage need to have a same strong paging processing capability, hindering cost reduction of a capacity-oriented base station for hotspot coverage.

### SUMMARY

To overcome a disadvantage in the prior art, embodiments of the present invention provide a base station, a network device, and a method for selecting, by user equipment in an idle state, a wireless coverage area to be camped on and paging user equipment by a network, to reduce paging overheads of a base station and a network device and save radio resources.

According to a first aspect, an embodiment of the present invention provides a method for paging user equipment, including: receiving, by user equipment, an area identifier and a corresponding layering type, where the layering type is a capacity-oriented type or a coverage-oriented type; if an area currently accessed by the user equipment is a capacity-oriented area, switching, by the user equipment, to a coverage-oriented area based on the layering type when changing to an idle state; and receiving a paging message for the coverage-oriented area.

In the foregoing method, the user equipment switches to the coverage-oriented area and waits to receive the paging message in the coverage-oriented area, so as to save radio resources and reduce paging overheads of a base station and a network device.

In a possible design, the user equipment receives a cell identifier, a base station identifier, or a basic-area identifier, and a corresponding layering type that are sent by a base station; or the user equipment receives a cell identifier or a basic-area identifier, and a corresponding layering type that are sent by a network device. In this way, the layering type is sent in different manners, thereby improving system flexibility.

In another possible design, the user equipment determines a coverage-oriented area corresponding to a current location, and switches to the coverage-oriented area corresponding to the current location. Further, after receiving the paging message, the user equipment initiates a service request procedure, and performs access from a capacity-oriented area corresponding to the current location, thereby improving utilization of the capacity-oriented area.

In another possible design, the user equipment receives a switching instruction sent by the network device or the base station, where the switching instruction is used to instruct the user equipment to switch to the coverage-oriented area when changing to the idle state. In this way, the network device can perform control so that some user equipments perform switching but the other user equipments do not perform switching, thereby improving system flexibility.

In another possible design, the user equipment receives a coverage-oriented area list sent by the network device or the base station, where the coverage-oriented area list includes one or more coverage-oriented areas, and the coverage-oriented area list is used to indicate a target switched-to area that can be selected by the user equipment; and the user equipment determines, based on the target switched-to area, the coverage-oriented area corresponding to the current location, and switches to the coverage-oriented area corresponding to the current location when changing to the idle state. Therefore, switching accuracy is further improved.

In another possible design, the user equipment sends, to the network device, an identifier of an area on which the user equipment camps after switching, and the network device may perform paging first in the camped-on area, to further reduce paging overheads.

According to a second aspect, an embodiment of the present invention provides a method for paging user equipment, including: determining, by a network device, a coverage-oriented area in a registration area of user equipment based on an area identifier and a corresponding layering type, where the layering type is a capacity-oriented type or a coverage-oriented type; and paging the user equipment in the coverage-oriented area.

In the foregoing method, the network device performs paging in the coverage-oriented area, so as to save radio resources and reduce paging overheads of a base station and the network device.

In a possible design, the network device determines, from a list of cells or basic areas included in the registration area of the user equipment, a cell or a basic area whose layering type is the coverage-oriented type as the coverage-oriented area; or receives a cell identifier, a base station identifier, or a basic-area identifier, and a corresponding layering type from a base station. In this way, system flexibility is improved.

In another possible design, the network device sends the area identifier and the corresponding layering type to the user equipment, where the layering type is used by the user equipment to determine a coverage-oriented area to be switched to in an idle state. The user equipment may further receive the area identifier and the corresponding layering type through a base station. In this way, system flexibility is further improved.

In another possible design, the network device sends a switching instruction to the user equipment, where the switching instruction is used to instruct the user equipment to switch to the coverage-oriented area when changing to the idle state. In this way, the network device can perform control so that some user equipments perform switching but the other user equipments do not perform switching, thereby improving system flexibility.

In another possible design, the network device receives an area identifier that is sent by the user equipment and that is of an area on which the user equipment camps after switching; and before paging the user equipment in the coverage-oriented area, the network device pages the user equipment in the area corresponding to the area identifier, to further reduce paging overheads.

According to a third aspect, an embodiment of the present invention provides user equipment having functions of implementing behavior of the user equipment in the foregoing methods. The functions may be implemented by hardware, or may be implemented by hardware executing corresponding software. The hardware or software includes one or more units corresponding to the foregoing functions, for example, includes a transceiver unit and a switching unit.

In a possible design, a structure of the user equipment includes a processor and a memory, where the memory is configured to store application program code that supports the user equipment in performing the foregoing methods, and the processor is configured to execute a program stored in the memory. The user equipment may further include a communications interface, configured to communicate with another device.

According to a fourth aspect, an embodiment of the present invention provides a network device having functions of implementing behavior of the network device in the foregoing methods. The functions may be implemented by hardware, or may be implemented by hardware executing corresponding software. The hardware or software includes one or more units corresponding to the foregoing functions, for example, includes a transceiver unit, a determining unit, and a paging unit.

In a possible design, a structure of user equipment includes a processor and a memory, where the memory is configured to store application program code that supports the network device in performing the foregoing methods, and the processor is configured to execute a program stored in the memory. The network device may further include a communications interface, configured to communicate with another device.

According to a fifth aspect, an embodiment of the present invention provides a base station having functions of implementing behavior of the base station in the foregoing methods. The functions may be implemented by hardware, or may be implemented by hardware executing corresponding software. The hardware or software includes one or more units corresponding to the foregoing functions, for example, includes a determining unit and a transceiver unit.

In a possible design, a structure of the base station includes a processor and a memory, where the memory is configured to store application program code that supports the base station in performing the foregoing methods, and the processor is configured to execute a program stored in the memory. The base station may further include a communications interface, configured to communicate with another device.

According to a sixth aspect, an embodiment of the present invention provides a computer storage medium, configured to store a computer software instruction used by the foregoing network device, base station, or user equipment, where the computer software instruction includes a program designed to perform the foregoing aspects.

According to the foregoing technical solutions provided in the embodiments of the present invention, when changing to the idle state, the user equipment chooses, based on an indication of the layering type, to switch to the coverage-oriented area to be camped on; and a network side pages the user equipment in the coverage-oriented area, to reduce paging overheads of the base station and the network device, and save radio resources. A capacity-layer base station only needs to implement a lightweight paging function, or even does not need to have a paging capability, thereby reducing implementation complexity and costs of the capacity-oriented base station, and reducing complexity of radio channel planning during deployment of the capacity-oriented base station.

### BRIEF DESCRIPTION OF DRAWINGS

FIG. 1 is an architectural diagram of a system for paging user equipment according to an embodiment of the present invention;
FIG. 2 is a schematic flowchart of a method for paging user equipment according to an embodiment of the present invention;
FIG. 3 is a schematic flowchart of a method for obtaining a layering type by user equipment according to an embodiment of the present invention;
FIG. 4 is a schematic flowchart of a method for performing switching by user equipment in an idle state according to an embodiment of the present invention;
FIG. 5 is a schematic flowchart of another method for paging user equipment according to an embodiment of the present invention;
FIG. 6 is a schematic flowchart of another method for paging user equipment according to an embodiment of the present invention;
FIG. 7 is a schematic structural diagram of user equipment according to an embodiment of the present invention;
FIG. 8 is another schematic structural diagram of user equipment according to an embodiment of the present invention;
FIG. 9 is a schematic structural diagram of a network device according to an embodiment of the present invention;
FIG. 10 is another schematic structural diagram of a network device according to an embodiment of the present invention;
FIG. 11 is a schematic structural diagram of a base station according to an embodiment of the present invention; and
FIG. 12 is another schematic structural diagram of a base station according to an embodiment of the present invention.

### DESCRIPTION OF EMBODIMENTS

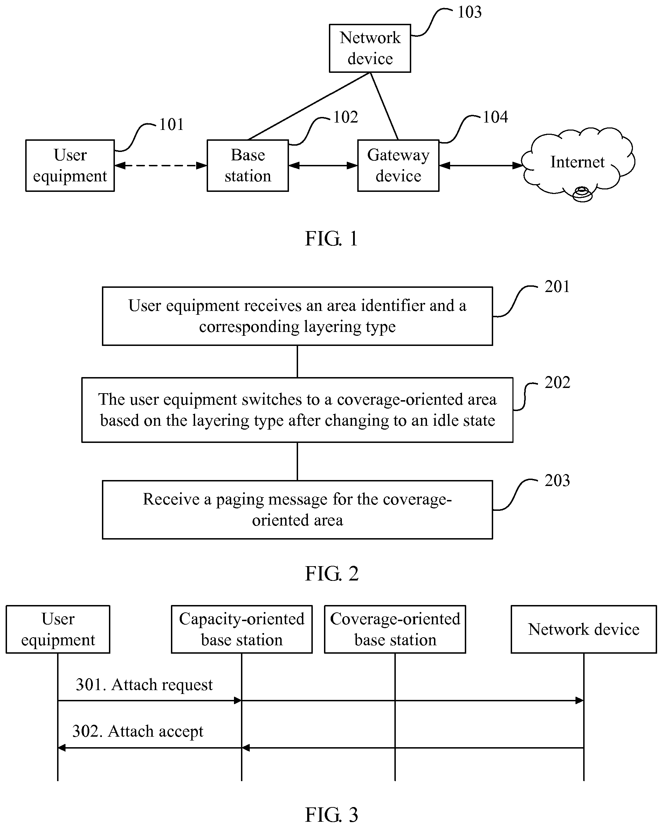

An embodiment of the present invention provides a communications system for paging user equipment. FIG. 1 is an architectural diagram of a communications system, and the communications system includes user equipment (User Equipment, UE) (101), a base station (102), a network device (103), and a gateway device.

The user equipment accesses a wireless network through the base station at a current location. The network device is configured to perform device registration, security authentication, mobility management, location management, and the like for the user equipment. The gateway device is configured to forward a data packet between the user equipment and an external data network. All the following embodiments are described by using the system architecture shown in FIG. 1 as an example.

The foregoing architecture may correspond to a plurality of actual mobile communications networks, such as a next generation (5G) mobile communications network, an EPS network, and a 2G/3G network. The network device may be a control plane (Control Plane, CP) function network element or a core control function (Core Control Function, CCF) network element, an access and mobility management function (Access & Mobility Function, AMF) entity, a mobility management entity (Mobility management entity, MME), or a serving GPRS support node (Serving GPRS Support Node, SGSN) device. The gateway device may be a user plane (User Plane, UP) function network element, a serving gateway (Serving Gateway, SGW), a data gateway (Packet data network-Gateway, PDN-GW), or a gateway GPRS support node (Gateway GPRS Support Node, GGSN).

The network device is connected to a plurality of base stations. For example, in an EPS network, an MME may be connected to tens of thousands of base stations (evolved NodeB, eNodeB). With further development of communications technologies, base stations are deployed more densely, and the network device may be connected to more base stations.

In the embodiments provided in the present invention, when changing to an idle state, the user equipment switches to a coverage-oriented area to be camped on. Switching of the user equipment from a capacity-oriented cell to a coverage-oriented cell may also be referred to as a fallback. On a network side, the network device determines a coverage-oriented area in a registration area of the user equipment, and pages the user equipment in the coverage-oriented area.

In the embodiments of the present invention, a cell, a base station, and a combination of a plurality of cells, for example, routing areas in a GSM/UMTS network or tracking areas in an EPS network, are collectively referred to as "areas". A combination of a plurality of cells, such as the routing area or the tracking area, is referred to as a "basic area". Attributes of an area include an area identifier, for example, a cell identifier, a base station identifier, or a basic-area identifier. The area attributes further include a layering type, and the laying type is also referred to as an area type and includes a coverage-oriented type and a capacity-oriented type. A coverage-oriented area and a capacity-oriented area are usually covered by different base stations. A same physical base station may cover both a coverage-oriented area and a capacity-oriented area.

A coverage-oriented base station is mainly intended to implement wide coverage of a network, aiming to provide seamless coverage within an entire wireless network, thereby avoiding occurrence of a dead zone in which there is no signal. Because a signal of a low frequency band is characterized by high penetrability and wide coverage, the coverage-oriented base station may usually operate in a low frequency band. The coverage-oriented base station is usually a macro base station, and may belong to a GSM/UMTS/LTE/5G network. A coverage-oriented area is a wireless area covered by the coverage-oriented base station.

A capacity-oriented base station is mainly intended to implement a large capacity of a network, and serves as a supplement to a coverage-oriented base station, to increase a quantity of users who can access the network and increase bandwidth that can be provided by the network. In particular, in a hotspot area, that is, an area in which users are densely populated, a problem of insufficient network capacities is obvious, and is resolved by densely deploying capacity-oriented base stations. Because a signal of a high frequency band is characterized by large bandwidth, the capacity-oriented base station may operate in a high frequency band. A capacity-oriented area is a wireless area covered by the capacity-oriented base station.

To effectively increase a network capacity, capacity-oriented base stations need to be densely deployed in a hotspot area. The capacity-oriented base station may be a micro base station (micro base station), a picocell base station (Pico base station), a femto base station (Femto base station), or the like, and these base stations may be referred to as small cells. Alternatively, the capacity-oriented base station may be a macro base station. The capacity-oriented base station may use an access technology different from an access technology used by the coverage-oriented base station. For example, the capacity-oriented base station belongs to a 5G network, and the coverage-oriented base station belongs to a GSM/UMTS/LTE network.

The layering type may also be referred to as a hotspot/non-hotspot area, a high-frequency/low-frequency area, a high-density/low-density area, a high-bandwidth/low-bandwidth area, a small cell/a macro base station, or the like, in addition to the coverage-oriented type/capacity-oriented type. In the embodiments of the present invention, all areas whose layering types each are a hotspot area, a high-frequency area, a high-density area, a high-bandwidth area, a small cell, or the like are capacity-oriented areas; and all areas whose layering types each are a non-hotspot area, a low-frequency area, a low-density area, a low-bandwidth area, a macro base station, or the like are coverage-oriented areas. In this solution, essence of classifying wireless coverage areas into a coverage-oriented area and a capacity-oriented area is as follows: user equipment in an idle state preferentially selects a coverage-oriented area to be camped on, and a network preferentially pages the user equipment in the coverage-oriented area, so as to implement precise paging and save paging overheads through coordination between camping policies of the user equipment and the network.

It should be especially noted that the coverage-oriented area and the capacity-oriented area are concepts of a wireless coverage area, for example, a wireless cell or a tracking area. Geographically, it is very probable that the coverage-oriented area and the capacity-oriented area coincide with each other. In other words, a coverage-oriented wireless cell and a capacity-oriented wireless cell may cover a same geographical location. User equipment may directly switch from a capacity-oriented cell to a coverage-oriented cell at a same location as the capacity-oriented cell.

During deployment of a base station, whether a layering type of the base station is the coverage-oriented type or the capacity-oriented type, or whether a layering type of each cell covered by the base station is the coverage-oriented type or the capacity-oriented type, may be set. Further, whether a layering type of a basic area served by the base station is the coverage-oriented type or the capacity-oriented type may also be set. When registering with a network device, the base station may notify the network device of a layering type of a wireless area served by the base station. A notification form may include:
the layering type of the base station, that is, whether the base station is of the coverage-oriented type or the capacity-oriented type; or
the layering type of each cell served by the base station, where layering types of cells served by a same base station may be different; or
the layering type of each basic area served by the base station, that is, whether the basic area is of the coverage-oriented type or the capacity-oriented type.

The network device records the layering type of the base station, the cell, or the basic area.

After notifying the network device of the layering type for the first time, if the layering type of the area changes, the base station may send a new layering type to the network device by using a configuration update request message. The network device updates the layering type corresponding to the area.

In another possible manner, layering types corresponding to all area identifiers are configured and managed by a same network management system. The layering type includes a layering type corresponding to a cell identifier, a layering type corresponding to a base station identifier, or a layering type corresponding to a basic-area identifier. The network management system delivers related configuration data to the base station and the network device, so that both the base station and the network device obtain area identifiers in their coverage and corresponding layering types.

In still another possible manner, the base station notifies the network device of a list of cells or basic areas supported by the base station; and the network device performs matching based on a layering type, configured by the network device, of a cell or basic area, to determine a layering type of the base station, a layering type of a cell served by the base station, or a layering type of a basic area served by the base station. For example, the base station notifies the network device of a list of tracking areas served by the base station, and the network device configures whether a layering type corresponding to each tracking area identifier is the coverage-oriented type or the capacity-oriented type.

FIG. 2 shows a method for paging user equipment according to an embodiment of the present invention. The method is applied to the user equipment in the system shown in FIG. 1, and the method specifically includes the following steps.

201. The user equipment receives an area identifier and a corresponding layering type, where the layering type is a capacity-oriented type or a coverage-oriented type.

The user equipment may obtain a cell identifier, a base station identifier, or a basic-area identifier, and a corresponding layering type from a base station or a network device, as respectively described below.

Manner 1: The user equipment obtains the area identifier and the layering type from a system message broadcast by a cell of a base station, or may obtain the area identifier and the layering type from another message at a radio resource control (Radio Resource Control, RRC) layer between base stations. If a current geographical location of the user equipment is covered by both a capacity-oriented cell and a coverage-oriented cell, the user equipment receives area identifiers and layering types that are respectively sent by the capacity-oriented cell and the coverage-oriented cell. Therefore, the user equipment may determine whether a layering type of a current camped-on cell is the capacity-oriented type and determine a coverage-oriented cell existing in an adjacent area, so as to determine whether the user equipment needs to switch to a coverage-oriented cell when changing to an idle state, and select a specific coverage-oriented cell to be switched to.

The area identifier may be a base station identifier, a cell identifier, or a basic-area identifier. The layering type indicates a layering type corresponding to the area identifier in the system message broadcast by the cell. The system message broadcast by the cell of the base station may include all of a base station identifier, a cell identifier, and a basic-area identifier. If the layering type is a layering type corresponding to a base station identifier, it usually indicates that all cells within coverage of the base station correspond to the layering type. If the layering type is a layering type corresponding to a basic-area identifier, it usually indicates that all cells in the basic area correspond to the layering type.

Table 1 below shows an example of the area identifier and the layering type that are received by the user equipment. The user equipment separately receives information sent by a capacity-oriented base station and information sent by a coverage-oriented base station.

**Table 1 Base station identifiers and layering types that are sent by a base station and received by user equipment**

| Base station identifier | Layering type |
|---|---|
| Base station 1 | Capacity-oriented type |
| Base station 2 | Coverage-oriented type |

Table 2 below shows another example of the area identifier and the layering type that are received by the user equipment. The user equipment separately receives information sent by a capacity-oriented cell and information sent by a coverage-oriented cell.

**Table 2 Cell identifiers and layering types that are sent by a base station and received by user equipment**

| Cell identifier | Cell type |
|---|---|
| Cell 11 | Capacity-oriented type |
| Cell 21 | Coverage-oriented type |

Manner 2: The user equipment obtains the area identifier and the layering type from a network device.

The user equipment may obtain the area identifier and the layering type in an attach procedure, a basic-area update procedure, a registration area update procedure, or the like. In an example shown in FIG. 3, the user equipment obtains the area identifier and the layering type through an attach procedure. An obtaining process includes the following steps:

301. The user equipment initiates an attach procedure, and sends an attach request message to the network device.

302. After authenticating the user equipment, the network device sends an attach accept message to the user equipment, where the attach accept message includes a basic-area identifier and a corresponding layering type.

The network device may send a basic-area list to the user equipment, and a layering type corresponding to each basic area. This usually indicates that all cells in the basic area correspond to the layering type.

For example, the network device sends a tracking area list (Tracking area List, TA List) in an EPS network to the user equipment, and the list includes a layering type of each tracking area. A system message, broadcast by a cell, that is sent by the base station and that is received by the user equipment includes an identifier of a tracking area to which the cell belongs. The user equipment may match a tracking area identifier sent by the network device with the tracking area identifier in the system message broadcast by the cell of the base station, to obtain a layering type corresponding to the cell. In this case, a coverage-oriented cell and a capacity-oriented cell belong to different tracking areas.

Table 3 below shows an example of the area identifier and the layering type that are received by the user equipment.

**Table 3 Area identifiers and layering types that are sent by a network device and received by user equipment**

| Basic-area identifier | Layering type |
|---|---|
| Basic area 1 | Capacity-oriented type |
| Basic area 2 | Coverage-oriented type |
| Basic area 3 | Capacity-oriented type |
| Basic area 4 | Coverage-oriented type |

In this step, the network device may alternatively send a cell list and a layering type corresponding to each cell to the user equipment. The system message, broadcast by the cell, that is sent by the base station and that is received by the user equipment includes a cell identifier. Therefore, the user equipment may determine whether a layering type of a current camped-on cell is the capacity-oriented type and determine a coverage-oriented cell existing at a current physical location.

202. If an area currently accessed by the user equipment is a capacity-oriented area, the user equipment switches to a coverage-oriented area based on the layering type when changing to an idle state.

When the user equipment in a connected state determines to change to the idle state, if a current camped-on wireless area belongs to the capacity-oriented type, the user equipment reselects a cell from an adjacent coverage-oriented area according to a specific policy and camps on the cell, and changes to the idle state. For example, the specific policy may be: selecting a cell whose signal strength is highest, or selecting a most proper cell based on a network selection policy indication (RAT/Frequency Selection Priority Index, RFSP Ind).

Before performing a switching action, the user equipment may obtain, from a message sent by the base station or the network device, a switching instruction instructing the user equipment to perform an action of switching from the capacity-oriented area to the coverage-oriented area. For example, the base station notifies the user equipment by using RRC layer signaling (RRC connection release), or the network device notifies the user equipment by using non-access stratum (Non-Access-Stratum, NAS) signaling (session deletion accept). The user equipment determines, based on the received switching instruction, to switch to the coverage-oriented area when changing to the idle state. In this way, the base station or the network device may determine, according to a policy and based on network service traffic, a quantity of users in a hotspot area, or the like, that some user equipments may perform switching and the other user equipments may not perform switching, thereby better balancing network load.

In a procedure in which the user equipment changes from the connected state to the idle state, if the user equipment needs to perform an operation of switching to a coverage-oriented area, the base station or the network device may provide, in a message, the user equipment with a target coverage-oriented cell to be switched to; or a target coverage-oriented cell list is used as a mandatory target or a reference target for the user equipment to select a target cell to be switched to.

In addition, the network device may determine, based on a paging capability of the base station, a switching capability of user equipment, and a mobility capability of user equipment, user equipment that needs to perform switching. The capabilities may be configured and delivered by a same network management system to the network device, or may be notified to the network device by using a signaling message. Details are specifically as follows:

The base station may notify the network device of a paging capability indication of the base station when registering with the network device, and the paging capability indication information is used to indicate that a capacity-layer base station has or does not have a paging capability.

The user equipment notifies the network device of a switching capability in an attach procedure, a basic-area update procedure, or the like. The switching capability is used to indicate whether the user equipment in the idle state can switch to a coverage-oriented area.

A mobility capability of user equipment may be determined by the network device based on a combination of implied information, such as a restricted area in subscription data, a capability reported by the user equipment, a movement track of the user equipment, and a policy delivered by a policy control center; and indicates that the user equipment is an immovable user (who performs access from a fixed location), a user who moves at a low rate, or a user who moves at a high rate.

Below are examples in which the network device determines user equipment that needs to perform switching.

For example, the network device determines, based on the paging capability of the base station, user equipment that needs to perform switch. If a capacity-oriented base station does not have a paging capability, all users switch to a coverage-layer area.

For another example, if the base station has a paging capability but a mobility capability of user equipment indicates that the user equipment performs access from a fixed location, the user equipment does not switch to a coverage-layer area.

For still another example, if switching instruction information for user equipment instructs the user equipment to switch to a coverage-layer area when the user equipment is in the idle state, the network device determines that the user equipment switches to the coverage-layer area when the user equipment in the idle state.

It should be noted that the paging capability of the base station, the switching capability of the user equipment, the mobility capability of the user equipment, and the like do not need to be provided at the same time. The network device may perform determining based one of the capabilities or a combination thereof. This is not limited in this embodiment.

For the foregoing two manners in which the user equipment learns of a layering type, there may also be two manners in which the user equipment switches to a coverage-oriented area when changing to the idle state.

Manner 1: The user equipment selects a cell whose layering type is the coverage-oriented type in a system message broadcast by the base station and switches to the cell.

For example, if a current location of the user equipment is within coverage of a base station 1 and a base station 2, the user equipment can receive system messages broadcast by both a cell of the base station 1 and a cell of the base station 2. If the user equipment learns, from layering types broadcast by the base station 1 and the base station 2, that a layering type of a currently accessed cell of the base station 1 is the capacity-oriented type and that a layering type of a cell, of the base station 2, at the current location is the coverage-oriented type, after changing to the idle state, the user equipment switches to a cell covered by the base station 2, for example, a cell 21 in Table 2.

Optionally, the user equipment may further send a switched-to-area notification message to the network device, to notify the network device of an area identifier of a coverage-oriented area on which the user equipment camps for the first time after switching. The area identifier may be a base station identifier, a cell identifier, or a basic-area identifier.

Manner 2: The user equipment selects, based on the area identifier and the corresponding layering type that are sent by the network device and with reference to an area identifier carried in a system message that is broadcast by a cell of the base station and that can be received at a current location, a cell whose layering type is the coverage-oriented type and switches to the cell.

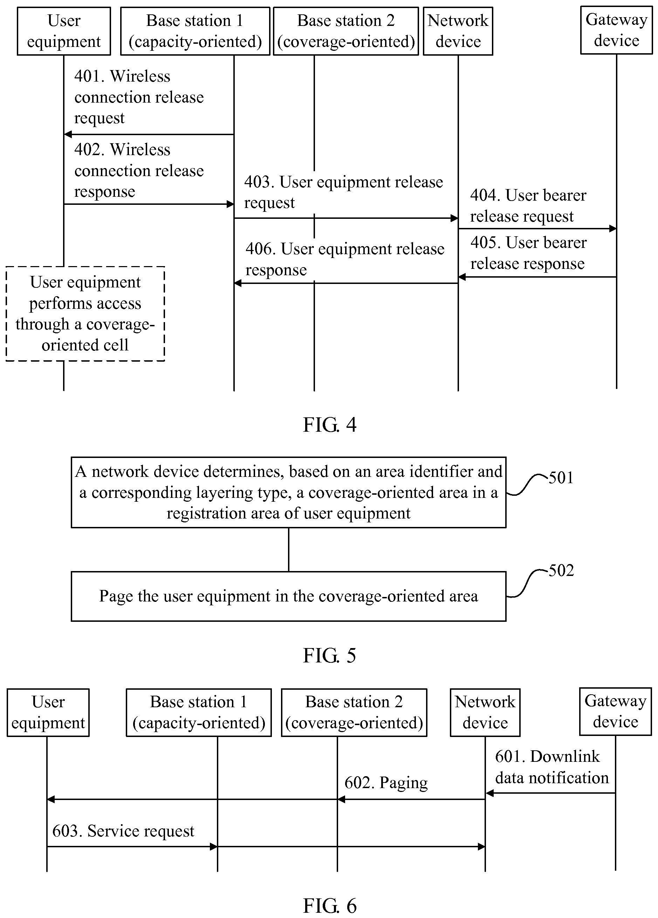

FIG. 4 is a schematic diagram of performing switching by user equipment when the user equipment changes to an idle state. The user equipment currently accesses a network through a base station 1. The user equipment obtains a layering type from a network device through an attach procedure or the like, and learns that a layering type of a current camped-on cell is a capacity-oriented type. When the base station 1 detects that the user equipment does not perform a service within a period of time, the base station initiates a procedure to change the user equipment to the idle state. A specific method includes the following steps.

401. The base station 1 sends a wireless connection release request message to the user equipment.

402. The user equipment determines to switch to a cell whose layering type is a coverage-oriented type, and replies to the base station 1 with a wireless connection release response message. Optionally, the message carries an identifier of a coverage-oriented area on which the user equipment camps for the first time after switching.

As described in step 401, the user equipment receives a basic-area list and a layering type corresponding to each basic-area identifier that are sent by the network device. The user equipment can receive, at a current location, system messages broadcast by a cell of the base station 1 and a cell of a base station 2, and the system messages each include an identifier of a basic area to which the cell belongs. The user equipment determines, by matching the basic-area identifiers sent by the network device with the basic-area identifiers in the system messages broadcast by the cells of the base stations, that a cell covered by the base station 2 at the current location is of a coverage-oriented type. In this case, the user equipment determines to switch to the cell of the base station 2.

403. The base station 1 instructs the network device to delete information about the user equipment, and notifies the network device of an area identifier of a coverage-oriented area on which the user equipment camps after switching.

S404 to S406. The network device deletes a data connection on a gateway device, and replies to the base station 1 with a release response message.

The user equipment may use a separate message to notify the network device of the identifier of the area on which the user equipment camps after switching.

Optionally, the user equipment may receive a cell list and a layering type corresponding to each cell identifier that are sent by the network device. The user equipment matches the cell identifiers sent by the network device with the cell identifiers included in the system messages that are broadcast by the cells of the base stations and that are received at the current location, to learn of a coverage-oriented cell at the current location, and switches to the coverage-oriented cell when changing to the idle state.

203. The user equipment receives a paging message for the coverage-oriented area.

After the user equipment switches to the coverage-oriented cell, if the network device initiates paging in the coverage-oriented area, the user equipment receives a paging message, and may initiate a service request procedure and change to a connected state. The user equipment should move in a coverage-oriented area in a registration area after changing to the idle state.

FIG. 5 is a schematic flowchart of paging user equipment by a network device according to an embodiment of the present invention. The method specifically includes the following steps:
501. A network device determines a coverage-oriented area in a registration area of user equipment based on an area identifier and a corresponding layering type.
502. The network device pages the user equipment in the coverage-oriented area.

FIG. 6 shows a specific example of a method for paging user equipment. For user equipment in an idle state, a network device pages the user equipment in a coverage-oriented area. The method specifically includes the following steps.

601. A network device receives a downlink data notification message sent by a gateway device, indicating that a network has data to send to user equipment and needs to page the user equipment.

602. The network device determines a coverage-oriented area in a registration area of the user equipment, pages the user equipment in the coverage-oriented area, and sends a paging message to a base station corresponding to the coverage-oriented area. For example, if the registration area of the user equipment is a tracking area list, the network device further determines, based on a correspondence between a tracking area identifier and a layering type, a tracking area whose layering type is a coverage-oriented type in the tracking area list as the coverage-oriented area.

Optionally, the registration area of the user equipment may be a routing area or a cell list, and the network device pages the user equipment in a cell whose layering type is the coverage-oriented type in the registration area.

If the user equipment notifies the network device of an identifier of an area on which the user equipment camps after switching, the network device may preferentially page the user equipment in an area corresponding to the area identifier. If the network device fails to page the user equipment, a paging area is enlarged, and the network device pages the user equipment in a coverage-oriented area. In this way, paging overheads on a base station and a core network can be further reduced.

603. The user equipment switches to a coverage-oriented cell when the user equipment is in an idle state, so that the user equipment can receive a paging message sent by a base station of a coverage-oriented area at a current location. After receiving the paging message, the user equipment may send a service request to the network device through the base station of the coverage-oriented area, so as to change to a connected state. Alternatively, when initiating a service request procedure, the user equipment preferentially switches to a capacity-oriented area to access the network. To be specific, the user equipment sends a service request to the network device through a base station of a capacity-oriented area at the current location. Alternatively, when initiating a service request procedure, the user equipment preferentially accesses the network from a capacity-oriented area that is before switching, and stores an identifier of a capacity-oriented cell that is before switching. To be specific, the user equipment preferentially sends a service request to the network device through a base station of the capacity-oriented cell.

In addition, the user equipment may have an inactive (Inactive) state. In this state, a wireless connection between the user equipment and the base station is released, but a connection between the base station and the network device is still retained. It is assumed that a same base station can cover both a capacity-oriented area and a coverage-oriented area. In other words, several cells of a same base station are capacity-oriented areas, and other cells of the base station are coverage-oriented areas. When entering the inactive state, the user equipment switches to cells whose area identifiers are coverage-oriented areas in a same base station. The base station performs paging in all the cells whose area identifiers are coverage-oriented areas within coverage of the base station, to change the user equipment to a connected state.

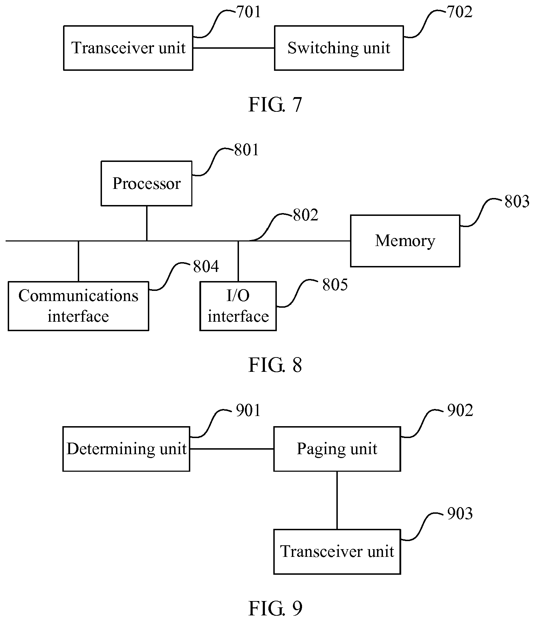

An embodiment of the present invention further provides a schematic structural diagram of user equipment. A shown in FIG. 7, the user equipment includes a transceiver unit 701 and a switching unit 702.

The transceiver unit is configured to receive an area identifier and a corresponding layering type, where the layering type is a capacity-oriented type or a coverage-oriented type.

The switching unit is configured to: if an area currently accessed by the user equipment is a capacity-oriented area, switch the user equipment to a coverage-oriented area based on the layering type when the user equipment changes to an idle state.

The transceiver unit is further configured to receive a paging message for the coverage-oriented area.

Further, these units implement related functions in the foregoing methods. Details are not described again.

In this embodiment, the user equipment is presented in a form of a functional unit. The "unit" herein may be an application-specific integrated circuit (application-specific integrated circuit, ASIC), a circuit, a processor and a memory that execute one or more software or firmware programs, an integrated logic circuit, and/or another device capable of providing the foregoing functions. In a simple embodiment, a person skilled in the art may figure out that the user equipment may be implemented by using a processor, a memory, and a communications interface.

Alternatively, the user equipment in this embodiment of the present invention may be implemented by using a computer device (or system) in FIG. 8. FIG. 8 is a schematic diagram of a computer device according to an embodiment of the present invention. The computer device includes at least one processor 801, a communications bus 802, a memory 803, and at least one communications interface 804, and may further include an I/O interface 805.

The processor 801 may be a general-purpose central processing unit (CPU), a microprocessor, an application-specific integrated circuit (application-specific integrated circuit, ASIC), or one or more integrated circuits configured to control program execution of solutions of the present invention.

The communications bus 802 may include a channel used to transfer information between the foregoing components. The communications interface 804 uses any transceiver-like apparatus to communicate with another device or another communications network, such as Ethernet, a radio access network (RAN), or a wireless local area network (Wireless Local Area Network, WLAN).

The memory 803 may be but is not limited to: a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blue-ray disc, or the like), a magnetic disk storage medium or another magnetic storage device, or any other computer-accessible medium that can be used to carry or store expected program code in an instruction or data structure form. The memory may exist independently, and is connected to the processor by using the bus. Alternatively, the memory may be integrated with the processor.

The memory 803 is configured to store application program code used to execute the solutions of the present invention, and the execution is controlled by the processor 801. The processor 801 is configured to execute the application program code stored in the memory 803.

During specific implementation, the processor 801 may include one or more CPUs. Each CPU may be a single-core (single-core) processor or a multi-core (multi-core) processor. The processor herein may be one or more devices, circuits, and/or processing cores that are used to process data (for example, a computer program instruction).

During specific implementation, in an embodiment, the computer device may further include an input/output (I/O) interface 805. For example, an output device may be a liquid crystal display (liquid crystal display, LCD), a light emitting diode (light emitting diode, LED) display device, a cathode ray tube (cathode ray tube, CRT) display device, a projector (projector), or the like. An input device may be a mouse, a keyboard, a touchscreen device, a sensor device, or the like.

The computer device may be a general-purpose computer device or a dedicated computer device. During specific implementation, the computer device may be a desktop computer, a portable computer, a network server, a palmtop computer (Personal Digital Assistant, PDA), a mobile phone, a tablet computer, a wireless terminal device, a communications device, an embedded device, or a device having a structure similar to that in FIG. 8. In this embodiment of the present invention, a type of the computer device is not limited.

The user equipment shown in FIG. 1 may be the device shown in FIG. 8. The memory 803 stores one or more software modules. The user equipment may implement the software modules by using the processor and the program code in the memory, to implement the foregoing methods.

An embodiment of the present invention further provides a computer storage medium, configured to store a computer software instruction used by the device shown in FIG. 7 or FIG. 8. The computer software instruction includes a program designed to perform the foregoing method embodiments, and the foregoing methods may be implemented by executing the stored program.

An embodiment of the present invention further provides a schematic structural diagram of a network device. As shown in FIG. 9, the network device includes a determining unit 901 and a paging unit 902.

The determining unit is configured to determine a coverage-oriented area in a registration area of user equipment based on an area identifier and a corresponding layering type, where the layering type is a capacity-oriented type or a coverage-oriented type.

The paging unit is configured to page the user equipment in the coverage-oriented area.

The network device further includes a transceiver unit 903. The transceiver unit is configured to receive a cell identifier, a base station identifier, or a basic-area identifier, and a corresponding layering type from a base station.

Further, these units implement related functions in the foregoing methods. Details are not described again.

In this embodiment, the network device is presented in a form of a functional unit. The "unit" herein may be an application-specific integrated circuit (application-specific integrated circuit, ASIC), a circuit, a processor and a memory that execute one or more software or firmware programs, an integrated logic circuit, and/or another device capable of providing the foregoing functions. In a simple embodiment, a person skilled in the art may figure out that the network device may be implemented by using a processor, a memory, and a communications interface.

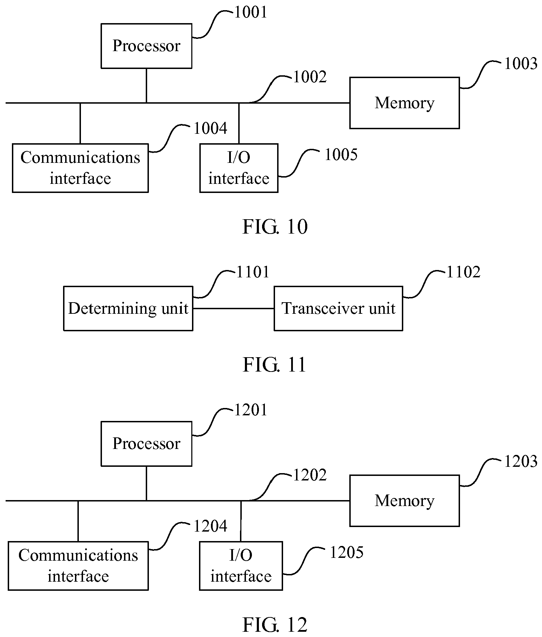

Alternatively, the network device in this embodiment of the present invention may be implemented by using a computer device (or system) in FIG. 10. FIG. 10 is a schematic diagram of a computer device according to an embodiment of the present invention. The computer device includes at least one processor 1001, a communications bus 1002, a memory 1003, and at least one communications interface 1004, and may further include an I/O interface 1005.

The processor 1001 may be a general-purpose central processing unit (CPU), a microprocessor, an application-specific integrated circuit (application-specific integrated circuit, ASIC), or one or more integrated circuits configured to control program execution of solutions of the present invention.

The communications bus 1002 may include a channel used to transfer information between the foregoing components. The communications interface 1004 uses any transceiver-like apparatus to communicate with another device or another communications network, such as Ethernet, a radio access network (RAN), or a wireless local area network (Wireless Local Area Network, WLAN).

The memory 1003 may be but is not limited to: a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blue-ray disc, or the like), a magnetic disk storage medium or another magnetic storage device, or any other computer-accessible medium that can be used to carry or store expected program code in an instruction or data structure form. The memory may exist independently, and is connected to the processor by using the bus. Alternatively, the memory may be integrated with the processor.

The memory 1003 is configured to store application program code used to execute the solutions of the present invention, and the execution is controlled by the processor 1001. The processor 1001 is configured to execute the application program code stored in the memory 1003.

During specific implementation, the processor 1001 may include one or more CPUs. Each CPU may be a single-core (single-core) processor or a multi-core (multi-core) processor. The processor herein may be one or more devices, circuits, and/or processing cores that are used to process data (for example, a computer program instruction).

During specific implementation, in an embodiment, the computer device may further include an input/output (I/O) interface 1005. For example, an output device may be a liquid crystal display (liquid crystal display, LCD), a light emitting diode (light emitting diode, LED) display device, a cathode ray tube (cathode ray tube, CRT) display device, a projector (projector), or the like. An input device may be a mouse, a keyboard, a touchscreen device, a sensor device, or the like.

The computer device may be a general-purpose computer device or a dedicated computer device. During specific implementation, the computer device may be a desktop computer, a portable computer, a network server, a palmtop computer (Personal Digital Assistant, PDA), a mobile phone, a tablet computer, a wireless terminal device, a communications device, an embedded device, or a device having a structure similar to that in FIG. 10. In this embodiment of the present invention, a type of the computer device is not limited.

The network device shown in FIG. 1 may be the device shown in FIG. 10. The memory 1003 stores one or more software modules. The network device may implement the software modules by using the processor and the program code in the memory, to implement the foregoing methods.

An embodiment of the present invention further provides a computer storage medium, configured to store a computer software instruction used by the device shown in FIG. 9 or FIG. 10. The computer software instruction includes a program designed to perform the foregoing method embodiments, and the foregoing methods may be implemented by executing the stored program.

An embodiment of the present invention further provides a schematic structural diagram a base station. As shown in FIG. 11, the base station includes a determining unit 1101 and a transceiver unit 1102.

The determining unit is configured to determine an area identifier and a corresponding layering type, where the area identifier is a cell identifier, a base station identifier, or a basic-area identifier, and the layering type is a capacity-oriented type or a coverage-oriented type.

The transceiver unit is configured to send the area identifier and the corresponding layering type to user equipment or a network device.

Further, these units implement related functions in the foregoing embodiments. Details are not described again.

In this embodiment, the base station is presented in a form of a functional unit. The "unit" herein may be an application-specific integrated circuit (application-specific integrated circuit, ASIC), a circuit, a processor and a memory that execute one or more software or firmware programs, an integrated logic circuit, and/or another device capable of providing the foregoing functions. In a simple embodiment, a person skilled in the art may figure out that the base station may be implemented by using a processor, a memory, and a communications interface.

Alternatively, the base station in this embodiment of the present invention may be implemented by using a computer device (or system) in FIG. 12. FIG. 12 is a schematic diagram of a computer device according to an embodiment of the present invention. The computer device includes at least one processor 1201, a communications bus 1202, a memory 1203, and at least one communications interface 1204, and may further include an I/O interface 1205.

The processor 1201 may be a general-purpose central processing unit (CPU), a microprocessor, an application-specific integrated circuit (application-specific integrated circuit, ASIC), or one or more integrated circuits configured to control program execution of solutions of the present invention.

The communications bus 1202 may include a channel used to transfer information between the foregoing components. The communications interface 1204 uses any transceiver-like apparatus to communicate with another device or another communications network, such as Ethernet, a radio access network (RAN), or a wireless local area network (Wireless Local Area Network, WLAN).

The memory 1203 may be but is not limited to: a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blue-ray disc, or the like), a magnetic disk storage medium or another magnetic storage device, or any other computer-accessible medium that can be used to carry or store expected program code in an instruction or data structure form. The memory may exist independently, and is connected to the processor by using the bus. Alternatively, the memory may be integrated with the processor.

The memory 1203 is configured to store application program code used to execute the solutions of the present invention, and the execution is controlled by the processor 1201. The processor 1201 is configured to execute the application program code stored in the memory 1203.

During specific implementation, the processor 1201 may include one or more CPUs. Each CPU may be a single-core (single-core) processor or a multi-core (multi-core) processor. The processor herein may be one or more devices, circuits, and/or processing cores that are used to process data (for example, a computer program instruction).

During specific implementation, in an embodiment, the computer device may further include an input/output (I/O) interface 1205. For example, an output device may be a liquid crystal display (liquid crystal display, LCD), a light emitting diode (light emitting diode, LED) display device, a cathode ray tube (cathode ray tube, CRT) display device, a projector (projector), or the like. An input device may be a mouse, a keyboard, a touchscreen device, a sensor device, or the like.

The computer device may be a general-purpose computer device or a dedicated computer device. During specific implementation, the computer device may be a desktop computer, a portable computer, a network server, a palmtop computer (Personal Digital Assistant, PDA), a mobile phone, a tablet computer, a wireless terminal device, a communications device, an embedded device, or a device having a structure similar to that in FIG. 10. In this embodiment of the present invention, a type of the computer device is not limited.

The base station shown in FIG. 1 may be the device shown in FIG. 12. The memory 1203 stores one or more software modules. The base station may implement the software modules by using the processor and the program code in the memory, to implement the foregoing methods.

An embodiment of the present invention further provides a computer storage medium, configured to store a computer software instruction used by the device shown in FIG. 11 or FIG. 12. The computer software instruction includes a program designed to perform the foregoing method embodiments, and the foregoing methods may be implemented by executing the stored program.

Although the present invention is described herein with reference to the embodiments, in a process of implementing the present invention that claims protection, a person skilled in the art may understand and implement other variations of the disclosed embodiments by viewing the accompanying drawings, disclosed content, and the accompanying claims. In the claims, "comprising" (comprising) does not exclude another component or another step, and "a" or "one" does not exclude a case of a plurality of. A single processor or another unit may implement several functions enumerated in the claims. Some measures are recorded in dependent claims that are different from each other, but this does not mean that these measures cannot be combined to produce a better effect.

A person skilled in the art should understand that the embodiments of the present invention may be provided as a method, an apparatus (device), or a computer program product. Therefore, the present invention may use a form of hardware only embodiments, software only embodiments, or embodiments with a combination of software and hardware. In addition, the present invention may use a form of a computer program product that is implemented on one or more computer-usable storage media (including but not limited to a disk memory, a CD-ROM, an optical memory, and the like) that include computer-usable program code. The computer program is stored/distributed in a proper medium and is provided as or used as a part of the hardware together with other hardware, or may be distributed in another form, for example, by using the Internet or another wired or wireless telecommunications system.

The present invention is described with reference to the flowcharts and/or block diagrams of the method, the apparatus (device), and the computer program product according to the embodiments of the present invention. It should be understood that computer program instructions may be used to implement each process and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of the another programmable data processing device generate an apparatus for implementing a specific function in one or more procedures in the flowcharts and/or in one or more blocks in the block diagrams.

These computer program instructions may also be stored in a computer readable memory that can instruct the computer or another programmable data processing device to work in a specific manner, so that the instructions stored in the computer readable memory generate an artifact that includes an instruction apparatus. The instruction apparatus implements a specific function in one or more procedures in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

Although the present invention is described with reference to specific features and the embodiments thereof, obviously, various modifications and combinations may be made to the present invention. Correspondingly, this specification and the accompanying drawings are merely example descriptions of the present invention defined by the accompanying claims, and considered as any of or all modifications, variations, combinations or equivalents that cover the scope of the present invention. Obviously, a person skilled in the art may make various modifications and variations to the present invention without departing from the scope of the present invention. Therefore, the present invention is intended to cover these modifications and variations provided that they fall within the scope of protection defined by the following claims and their equivalent technologies.

## Claims

1. A method for paging user equipment, comprising:
receiving, by user equipment, an area identifier and a corresponding layering type, wherein the layering type is a capacity-oriented type or a coverage-oriented type;
if an area currently accessed by the user equipment is a capacity-oriented area, switching, by the user equipment, to a coverage-oriented area based on the layering type when changing to an idle state; and
receiving a paging message for the coverage-oriented area.

2. The method according to claim 1, wherein the area identifier is a cell identifier, a base station identifier, or a basic-area identifier; and
the receiving an area identifier and a corresponding layering type comprises: receiving a cell identifier, a base station identifier, or a basic-area identifier, and a corresponding layering type that are sent by a base station.

3. The method according to claim 1, wherein the area identifier is a cell identifier or a basic-area identifier; and
the receiving an area identifier and a corresponding layering type comprises: receiving a cell identifier or a basic-area identifier, and a corresponding layering type that are sent by a network device.

4. The method according to claims 1 to 3, wherein the switching to a coverage-oriented area based on the layering type specifically comprises:
determining a coverage-oriented area corresponding to a current location, and switching to the coverage-oriented area corresponding to the current location.

5. The method according to claims 1 to 4, further comprising:
receiving, by the user equipment, a switching instruction sent by the network device or the base station, wherein the switching instruction is used to instruct the user equipment to switch to the coverage-oriented area when changing to the idle state; and
switching, by the user equipment based on the switching instruction, to the coverage-oriented area corresponding to the current location when changing to the idle state.

6. The method according to claims 1 to 5, further comprising:
receiving, by the user equipment, a coverage-oriented area list sent by the network device or the base station, wherein the coverage-oriented area list comprises one or more coverage-oriented areas, and the coverage-oriented area list is used to indicate a target switched-to area that can be selected by the user equipment; and
determining, by the user equipment based on the target switched-to area, the coverage-oriented area corresponding to the current location, and switching to the coverage-oriented area corresponding to the current location when changing to the idle state.

7. The method according to claims 1 to 6, comprising:
sending, by the user equipment to the network device, an identifier of an area on which the user equipment camps after switching, wherein the area identifier is a base station identifier, a cell identifier, or a basic-area identifier.

8. A method for paging user equipment, comprising:
determining, by a network device, a coverage-oriented area in a registration area of user equipment based on an area identifier and a corresponding layering type, wherein the layering type is a capacity-oriented type or a coverage-oriented type; and
paging the user equipment in the coverage-oriented area.

9. The method according to claim 8, wherein the area identifier is a cell identifier or a basic-area identifier; and
the determining a coverage-oriented area in a registration area of user equipment comprises: determining, by the network device, from a list of cells or basic areas comprised in the registration area of the user equipment, a cell or a basic area whose layering type is the coverage-oriented type as the coverage-oriented area.

10. The method according to claims 8 and 9, further comprising:
receiving, by the network device, a cell identifier, a base station identifier, or a basic-area identifier, and a corresponding layering type from a base station.

11. The method according to claims 8 to 10, further comprising:
sending, by the network device, the area identifier and the corresponding layering type to the user equipment, wherein the layering type is used by the user equipment to determine a coverage-oriented area to be switched to in an idle state by the user equipment.

12. The method according to claims 8 to 11, further comprising:
sending, by the network device, a switching instruction to the user equipment, wherein the switching instruction is used to instruct the user equipment to switch to the coverage-oriented area when changing to the idle state.

13. The method according to claims 8 to 12, further comprising:
sending, by the network device, a coverage-oriented area list to the user equipment, wherein the coverage-oriented area list comprises one or more coverage-oriented areas, and the coverage-oriented area list is used to indicate a target switched-to area that can be selected by the user equipment.

14. The method according to claims 8 to 13, further comprising:
receiving, by the network device, an identifier of an area on which the user equipment camps after switching, wherein the area identifier is a base station identifier, a cell identifier, or a basic-area identifier; and
before paging the user equipment in the coverage-oriented area, paging, by the network device, the user equipment in the area corresponding to the area identifier, wherein the coverage-oriented area comprises the area corresponding to the area identifier.

15. User equipment, comprising a transceiver unit and a switching unit, wherein
the transceiver unit is configured to receive an area identifier and a corresponding layering type, wherein the layering type is a capacity-oriented type or a coverage-oriented type;
the switching unit is configured to: if an area currently accessed by the user equipment is a capacity-oriented area, switch the user equipment to a coverage-oriented area based on the layering type when the user equipment changes to an idle state; and
the transceiver unit is further configured to receive a paging message for the coverage-oriented area.

16. The user equipment according to claim 15, wherein the area identifier is a cell identifier, a base station identifier, or a basic-area identifier; and
the transceiver unit is specifically configured to receive an area identifier and a corresponding layering type comprises: the transceiver unit is configured to receive a cell identifier, a base station identifier, or a basic-area identifier, and a corresponding layering type that are sent by a base station.

17. The user equipment according to claim 15, wherein the area identifier is a cell identifier or a basic-area identifier; and
that the transceiver unit receives an area identifier and a corresponding layering type comprises: the transceiver unit is configured to receive a cell identifier or a basic-area identifier, and a corresponding layering type that are sent by a network device.

18. The user equipment according to claims 15 to 17, wherein that the switching unit switches the user equipment to a coverage-oriented area based on the layering type specifically comprises:
determining, by the switching unit, a coverage-oriented area corresponding to a current location, and switching the user equipment to the coverage-oriented area corresponding to the current location.

19. The user equipment according to claims 15 to 18, wherein
the transceiver unit is configured to receive a switching instruction sent by the network device or the base station, wherein the switching instruction is used to instruct the user equipment to switch to the coverage-oriented area when changing to the idle state; and
the switching unit switches, based on the switching instruction, the user equipment to the coverage-oriented area corresponding to the current location when the user equipment changes to the idle state.

20. The user equipment according to claims 15 to 19, wherein
the transceiver unit is configured to receive a coverage-oriented area list sent by the network device or the base station, wherein the coverage-oriented area list comprises one or more coverage-oriented areas, and the coverage-oriented area list is used to indicate a target switched-to area that can be selected by the user equipment; and
the switching unit determines, based on the target switched-to area, the coverage-oriented area corresponding to the current location, and switches the user equipment to the coverage-oriented area corresponding to the current location when the user equipment changes to the idle state.

21. The user equipment according to claims 15 to 20, wherein the transceiver unit sends, to the network device, an identifier of an area on which the user equipment camps after switching, and the area identifier is a base station identifier, a cell identifier, or a basic-area identifier.

22. A network device, comprising a determining unit and a paging unit, wherein
the determining unit is configured to determine a coverage-oriented area in a registration area of user equipment based on an area identifier and a corresponding layering type, wherein the layering type is a capacity-oriented type or a coverage-oriented type; and
the paging unit is configured to page the user equipment in the coverage-oriented area.

23. The network device according to claim 22, wherein the area identifier is a cell identifier or a basic-area identifier; and
that the determining unit determines a coverage-oriented area in a registration area of user equipment comprises: determining, from a list of cells or basic areas comprised in the registration area of the user equipment, a cell or a basic area whose layering type is the coverage-oriented type as the coverage-oriented area.

24. The network device according to claims 22 and 23, wherein the network device further comprises a transceiver unit; and
the transceiver unit is configured to receive a cell identifier, a base station identifier, or a basic-area identifier, and a corresponding layering type from a base station.

25. The network device according to claims 22 to 24, wherein the transceiver unit is further configured to send the area identifier and the corresponding layering type to the user equipment, and the layering type is used by the user equipment to determine a coverage-oriented area to be switched to in an idle state by the user equipment.

26. The network device according to claims 22 to 25, wherein the transceiver unit is further configured to send a switching instruction to the user equipment, and the switching instruction is used to instruct the user equipment to switch to the coverage-oriented area when changing to the idle state.

27. The network device according to claims 22 to 26, wherein the transceiver unit is further configured to send a coverage-oriented area list to the user equipment, the coverage-oriented area list comprises one or more coverage-oriented areas, and the coverage-oriented area list is used to indicate a target switched-to area that can be selected by the user equipment.

28. The network device according to claims 22 to 27, wherein
the transceiver unit is further configured to receive an identifier of an area on which the user equipment camps after switching, wherein the area identifier is a base station identifier, a cell identifier, or a basic-area identifier; and
the coverage-oriented area comprises the area corresponding to the area identifier; and before paging the user equipment in the coverage-oriented area, the paging unit pages the user equipment in the area corresponding to the area identifier.

29. Abase station, comprising a determining unit and a transceiver unit, wherein
the determining unit is configured to determine an area identifier and a corresponding layering type, wherein the area identifier is a cell identifier, a base station identifier, or a basic-area identifier, and the layering type is a capacity-oriented type or a coverage-oriented type; and
the transceiver unit is configured to send the area identifier and the corresponding layering type to user equipment or a network device.

30. The base station according to claim 29, wherein the transceiver unit is further configured to send a switching instruction, and the switching instruction is used to instruct the user equipment to switch to the coverage-oriented area when changing to the idle state.
